(19) Europäisches Patentamt / European Patent Office / Office européen des brevets

(11) **EP 2 791 640 B1**

(12) **FASCICULE DE BREVET EUROPEEN**

(45) Date de publication et mention de la délivrance du brevet:
**17.10.2018 Bulletin 2018/42**

(21) Numéro de dépôt: **12798739.4**

(22) Date de dépôt: **10.12.2012**

(51) Int Cl.:
***G01L 1/24*** (2006.01) ***B60G 15/02*** (2006.01)
***F16F 1/366*** (2006.01) ***F16F 1/368*** (2006.01)
***G01B 11/16*** (2006.01) ***G01G 3/12*** (2006.01)
***G01D 5/353*** (2006.01)

(86) Numéro de dépôt international:
**PCT/EP2012/074979**

(87) Numéro de publication internationale:
**WO 2013/087580 (20.06.2013 Gazette 2013/25)**

(54) **RESSORT AVEC CAPTEUR DE DEFORMATION INTEGRE**

FEDER MIT EINGEBAUTEM VERFORMUNGSSENSOR

SPRING HAVING A BUILT-IN DEFORMATION SENSOR

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **13.12.2011 FR 1161585**

(43) Date de publication de la demande:
**22.10.2014 Bulletin 2014/43**

(73) Titulaire: **Renault S.A.S.**
**92100 Boulogne-Billancourt (FR)**

(72) Inventeurs:
- **CHABANON, Christian**
**F-78180 Montigny-le-Bretonneux (FR)**
- **JACQUES, Anthony**
**78540 Vernouillet (FR)**

(56) Documents cités:
**EP-A2- 0 337 488**
**WO-A1-94/24534**
**GB-A- 2 421 075**
**US-A- 4 411 159**
**US-A- 6 039 311**
**US-A1- 2004 031 911**
**US-B2- 7 083 199**

- **D. ABDUL BUDAN ET AL: "Carbon Fiber Reinforced Composite Coil Springs", INTERNATIONAL CONFERENCE ON ADVANCES IN INDUSTRIAL AND PRODUCTION ENGINEERING - AIPE 2011, 15 novembre 2011 (2011-11-15), pages 17-21, XP055031378, Kuala Lumpur, Malaysia DOI: 02.AIPE.2011.01.508**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).



Printed by Jouve, 75001 PARIS (FR)

## Description

Est ici concerné un ressort intelligent. Plus particulièrement, la présente invention a pour objet un ressort équipé d'un capteur de déformation pour mesurer une charge d'une roue d'un véhicule. Ce type de ressort a de nombreuses applications dans le domaine des véhicules. Connaitre la charge s'appliquant sur les roues d'un véhicule constitue des données d'entrée pouvant servir pour piloter les suspensions, pour adapter l'électro-stabilisateur programmé, pour optimiser le freinage, ou même pour avertir l'utilisateur d'un véhicule en cas de surcharge.

Dans le domaine, on connaît déjà des moyens permettant d'estimer la charge s'appliquant sur une roue d'un véhicule. Ces moyens sont constitués par des dispositifs du type jauge de déformations, aussi appelée usuellement jauge de contraintes (voir par exemple le document EP0337488-A2).

Le but de cette jauge est de traduire la déformation d'une pièce en variation de résistance électrique : plus la jauge de déformation s'étire, plus la résistance augmente.

Cette jauge est collée sur le ressort. Ainsi, lorsque des contraintes seront exercées sur le ressort, une variation de la valeur de la résistance va être mesurée permettant subséquemment d'en déduire la variation de longueur. A partir de la variation de la longueur, il est alors possible d'en déduire les contraintes s'exerçant sur le ressort et ainsi d'en déduire la force s'exerçant sur le ressort. On en déduit la charge s'exerçant sur la roue du véhicule.

Les conditions d'utilisation de telles jauges présentent plusieurs inconvénients.

Etant collé sur le support, soit le ressort, la jauge de déformations est désavantageusement soumise aux conditions environnementales du véhicule.

Plus précisément, le corps d'épreuve définissant la partie qui subira les déformations est réalisée en un matériau pour lequel il est difficile de trouver un compromis. Par exemple, certains aciers alliés présentent une bonne précision de mesure et une excellente résistance à la fatigue mais sont vulnérables à la corrosion. Au contraire, un acier inoxydable présente une bonne résistance à la corrosion mais il est moins homogène et est donc moins précis.

En outre, la jauge est soumise à d'autres effets parasites tels que des effets thermoélectriques liés à la différence de température entre deux points de raccordement de la jauge.

Un autre effet parasite que présente la jauge de déformations est qu'il présente un phénomène d'hystérisis, c'est-à-dire que l'information que délivre la jauge est différente suivant que les mesures sont sous charge croissante ou décroissante. Il n'est aujourd'hui pas possible de le compenser avec l'électronique de mesure. Ce phénomène est notamment dépendant du matériau constituant la jauge de déformations.

Un autre inconvénient engendré par ce type de solution de mesure est que l'information délivrée en sortie n'est pas toujours proportionnelle à la valeur d'entrée, ce qui diminue la qualité de la mesure.

Par ailleurs le document US4411159 divulgue des jauges de contraintes intégrées dans un ressort à lames d'un dispositif d'amortissement de véhicule.

Le document US7083199-B2 divulgue une suspension de véhicule dans laquelle le bras reliant le châssis à la roue comprend une structure composite et un capteur à fibre optique pour détecter toute charge excessive appliquée au bras.

Le document US2004/031911 divulgue un dispositif avec un actionneur électromagnétique comprenant un ressort de soupape, ce ressort comprenant une structure composite et une fibre optique à cellule de Bragg.

Il est ici proposé de remédier à une partie au moins de ces inconvénients, notamment de protéger les moyens de mesure de la charge des agressions extérieures et de renforcer la qualité de la mesure, en proposant qu'un ressort connu d'un dispositif d'amortissement d'une roue, du type comprenant une structure composite comportant des fibres de renforcement dans une matrice, se distingue en ce que la structure composite comprenne au moins une cellule de Bragg et au moins une fibre optique connectée à la cellule de Bragg.

L'agencement d'une fibre optique connectée à une ou plusieurs cellules de Bragg offre une solution de mesure de la charge d'un véhicule sur ses différentes roues.

Pour estimer la charge verticale appliquée sur un véhicule, la solution visée consiste en la mesure de la charge en estimant les contraintes ayant lieu à l'endroit du ressort. Il s'agit donc de trouver un capteur de contrainte destiné à un ressort. Ce type de mesure ne sera possible que lorsque les amortisseurs ne passeront pas d'effort et que la vitesse verticale des suspensions est nulle, de manière à estimer la charge uniquement à partir des données issues du ressort.

En outre, il est particulièrement avantageux que la fibre optique à cellule (s) de Bragg soit comprise dans la structure composite. De cette manière, la fibre optique est incorporée avec les autres fibres, et notamment les fibres de renforcement.

Ainsi, la fibre optique et la/les cellule(s) de Bragg sont insensibles aux agressions extérieures du type eau, huile, projections diverses, corrosion électrochimique, acide utilisé dans les stations de lavage automatique. En effet, la fibre optique et les cellules de Bragg sont protégées par l'enveloppe du ressort.

Un autre avantage est que la fibre optique et les cellules de Bragg sont insensibles aux perturbations électromagnétiques.

En outre, les cellules de Bragg présentent une très bonne stabilité dans le temps. La mesure des déformations est indépendante de l'intensité du signal lumineux et de la courbure des fibres.

Avantageusement, des capteurs de déformation formés par une fibre optique connectée à une/des cellule (s) de Bragg permet de faire fonctionner les capteurs dans une plage de température relativement importante comprise entre -40°C et 50°C, et cela tout en gardant la précision de mesure sur l'ensemble des températures comprises dans la gamme susmentionnée.

Un autre avantage apporté par la présente solution est qu'il est possible d'intégrer la fibre optique et la/les cellule(s) de Bragg dans une ou plusieurs zones du ressort de manière à permettre la reconstruction de la charge statique d'un véhicule.

Une telle solution peut s'intégrer dans tout type de ressort composite. Cela permet donc de conserver les règles métier de conception d'un ressort - sans produire d'effort supplémentaire de conception.

De plus, la fibre optique connectée à des cellules de Bragg fonctionne avec les différentes géométries du ressort. Le diamètre de la fibre optique est supérieur à 20 mm ce qui est largement compatible avec les diamètres d'enroulement du ressort mesurant environ 150 mm.

Un autre avantage est que cette solution présente un coût réduit puisque le ressort dure la vie du véhicule.

Le poids de la fibre optique et des cellules de Bragg est négligeable par rapport au poids du ressort. Ainsi, le poids des capteurs de contraintes formés notamment par la fibre optique et les cellules de Bragg n'augmente pas la masse du ressort.

Un autre avantage conféré par la présente solution est l'existence d'une seule fibre pour l'ensemble des mesures. Ainsi, la solution visée réduit l'encombrement dans le passage de roues.

Avantageusement, la présence de ce capteur sur le ressort permet de surveiller mécaniquement l'organe.

Cette solution est applicable sur les suspensions de tous types de véhicule, et cela sans avoir à refaire tous les trains des véhicules ou les outillages spécifiques dans les manufactures.

En outre, il n'y a pas d'électronique embarquée sur le corps du ressort, ce qui simplifie les tests, les précautions d'usage pour les ouvriers, les précautions d'usage pour les matériels sur les lignes de fabrication, et les précautions de montage des suspensions automobiles.

Selon un mode particulier de réalisation, le ressort est hélicoïdal et comprend un fil enroulé en hélice autour d'un premier axe, ledit fil présentant une section sensiblement circulaire et s'étendant le long d'un second axe de la structure composite dans laquelle la fibre optique est orientée suivant la direction définie par les fibres de renforcement.

De cette manière, l'agencement de la fibre optique dans la structure composite limite l'altération des propriétés mécaniques de la structure.

Suivant un autre mode particulier de réalisation, le ressort présente un axe longitudinal et comprend des lames s'étendant sensiblement selon l'axe longitudinal et au sein au moins de l'une d'elles s'étend longitudinalement la fibre optique.

Un tel agencement permet de capter avantageusement les déformations de la lame suivant la direction principale définie par la lame.

Selon un mode particulier de réalisation où le ressort est hélicoïdal, la fibre optique est adjacente à un contour extérieur du fil.

La proportion d'effort perçue par la fibre optique connectée à la cellule de Bragg est proportionnelle à la distance radiale à la fibre neutre, laquelle définit la fibre en le centre du fil. Cela permet avantageusement d'améliorer la sensibilité de la mesure des contraintes s'exerçant sur le ressort.

Selon un autre mode particulier de réalisation, sont agencées une première cellule et une seconde cellule de Bragg, la seconde cellule étant agencée par rapport à la première cellule à une distance sensiblement équivalente à la distance parcourue par la fibre optique lorsqu'elle opère une demi-révolution autour du second axe (B) du fil.

Le positionnement de la cellule de Bragg peut donner lieu à un phénomène de dispersion. L'agencement de deux cellules de Bragg tel que ci-dessus mentionné permet d'annuler en tout ou partie ce phénomène. En effet, la moyenne des contraintes mesurées par ces deux cellules sera constante, quelle que soit la dispersion.

Selon un autre mode particulier de réalisation, longitudinalement, sont agencées une première cellule et une seconde cellule disposées chacune respectivement de part et d'autre d'un point (M) de moment fléchissant maximum, les première et seconde cellule définissant des distances avec le point (M) de moment fléchissant maximum sensiblement égales entre elles et définissant entre elles une distance maitrisée D.

Selon un autre mode particulier de l'invention, longitudinalement, sont agencées une première cellule et une seconde cellule disposées chacune respectivement de part et d'autre d'un point définissant le milieu de la lame suivant l'axe longitudinal (X), les première et seconde cellule définissant des distances avec le point définissant le milieu de la lame sensiblement égales entre elles et définissant entre elles une distance maitrisée D.

Un tel agencement permet en tout ou partie de s'affranchir de la dispersion sur le positionnement relatif des cellules de Bragg. La distance doit être choisie de sorte que lorsque le ressort est monté sur le véhicule, elle soit assez grande pour garantir ce positionnement de part et d'autre respectivement du point de moment fléchissant maximum en fonction de la dispersion mais la plus petite possible pour être positionnée dans les zones de plus grandes contraintes. Cela permet avantageusement d'améliorer la précision du capteur.

Selon un mode particulier de réalisation, les fibres de renforcement sont inclinées d'un angle $\alpha$ par

rapport au second axe, ledit angle $\alpha$ étant compris entre 30° et 50°, préférentiellement 44° sur les réalisations habituelles de ressorts automobiles.

Un tel agencement permet avantageusement de faire travailler les fibres de renforcement en traction-compression lorsque le ressort est hélicoïdal.

En outre, il est envisageable d'incliner les fibres de renforcement en fonction de l'angle d'enroulement des spires du ressort. Cela dépend notamment du diamètre du ressort et du nombre de spires composant le ressort. En prenant en compte ces données, il est possible d'optimiser l'angle de tressage des fibres, dont la fibre optique, afin d'optimiser les contraintes s'exerçant sur le ressort suivant son axe de fil.

Selon un mode particulier de réalisation, où le ressort est un ressort à lames, les fibres de renforcement sont unidirectionnelles.

Cela permet avantageusement d'améliorer les propriétés mécaniques du matériau.

Suivant un second objet de l'invention, est également proposé un dispositif pour mesurer une charge d'au moins une roue d'un véhicule, le dispositif comprenant :

- un ressort tel que défini précédemment, adapté à être monté sur ladite roue ;
- un module source apte à émettre des signaux lumineux vers la ou les cellule(s) de Bragg du ressort ;
- un module récepteur, également appelé interrogateur, apte à recevoir des signaux transmis par la ou les cellules de Bragg et à les convertir en données de sortie ;
- un module de calcul apte à traiter lesdites données de sortie et à calculer la charge de la roue équipée du ressort.

L'avantage de ce type de dispositif est le fait de pouvoir déporter les différents modules électroniques loin du ou des points de mesure. Ainsi, il est possible de placer les différents modules selon l'encombrement du véhicule. En outre, cela permet de faciliter la procédure de montage du dispositif. Le module récepteur peut successivement interroger chaque ressort d'un véhicule composé d'un ou plusieurs réseaux de Bragg identiques d'un point de vue optique. Cette particularité de l'interrogateur apporte un gain significatif dans le coût du couple module récepteur / capteur.

Il est de plus possible de faire la détection de deux manières : par détection en réflexion ou par détection en transmission. Dans le premier cas, le signal lumineux est renvoyé à la source, le module source peut donc également être le module récepteur. Dans le second cas, le signal lumineux est envoyé au module récepteur.

Il convient de préciser que dans le cas d'une intégration sur un ressort automobile, il sera plus intéressant de travailler en analyse de la réflexion, et ceci de manière à favoriser l'intégration de la fibre optique et diminuer l'encombrement.

Suivant un troisième objet de l'invention, est également proposé un procédé pour mesurer une charge d'au moins une roue d'un véhicule, le procédé comprenant les étapes suivantes :

a) au moins une fibre optique à cellule (s) de Bragg formant capteur de mesure des déformations et comprenant une/des cellule (s) de Bragg, est implantée dans un ressort ;

b) un module source émet des signaux lumineux vers chaque cellule de Bragg ;

c) chaque cellule de Bragg restitue un signal lumineux à un module récepteur ;

d) le module récepteur convertit les signaux lumineux en données de sortie et les transmet à un module de calcul;

e) le module de calcul traite les données de sortie et calcule la charge de la roue équipée du ressort.

Suivant un quatrième objet de l'invention, est également proposé un véhicule pourvu pour son déplacement d'une roue comprenant un ressort tel que visé par la présente demande.

Toutes les caractéristiques qui précèdent peuvent se combiner en tout ou partie.

D'autres caractéristiques et avantages ressortiront clairement de la description qui est faite ci-après, à titre indicatif et nullement limitatif, en référence aux dessins annexés, dans lesquels :

- la figure 1 représente schématiquement un ressort hélicoïdal composite simple comprenant une fibre optique connectée à des cellules de Bragg ;
- la figure 2 montre une vue de coupe du fil du précédent ressort hélicoïdal composite ;
- la figure 3 montre schématiquement un ressort à lames composite simple comprenant une fibre optique connectée à des cellules de Bragg ;
- la figure 4 montre une vue en perspective d'une lame d'un ressort à lames soumis à un moment fléchissant selon un axe Z ;
- la figure 5 montre la disposition générale des cellules de Bragg au sein du ressort à lames ;
- la figure 6 présente un diagramme des efforts du moment fléchissant s'exerçant sur la lame conforme à la figure 4 en fonction de l'abscisse X ;
- la figure 7 présente un schéma de principe de l'architecture d'implantation du capteur à cellules de Bragg ;
- la figure 8 montre le concept général d'une fibre optique connectée à des cellules de Bragg
- la figure 9 montre le passage de la fibre optique par la partie inférieure du ressort ;
- la figure 10a montre la sortie de la fibre optique du fil du ressort, avec une patte d'indexage adaptée

pour que la fibre optique puisse sortir librement ;

- la figure 10b est une vue analogue montrant une variante de la sortie de la fibre optique du ressort selon laquelle le pliage de la patte est inversée de sorte à faire sortir la fibre prématurément et de la faire passer par le trou d'empreinte de la patte ;
- la figure 11 montre la fibre optique protégée par une gaine à l'endroit de l'extrémité de sortie du fil du ressort ;
- la figure 12 montre un ressort selon l'un quelconque des modes de réalisation compris entre le support de ressort et la caisse du véhicule.

Sur les figures 1 et 2 puis la figure 3 sont respectivement représentés deux ressorts mécaniques différents : un ressort 100 hélicoïdal et un ressort 200 à lames.

Ces ressorts 100, 200 comprennent une structure composite comportant des fibres de renforcement 101 (figure 1), 201 (non représentées) dans une matrice 102 (figure 1), 202 (non représentée). A titre d'exemple, le document FR2837250 montre un ressort hélicoïdal et son procédé de fabrication.

La structure composite comprend en outre au moins une cellule de Bragg 103, 203 et au moins une fibre optique 104, 204 connectée à la cellule de Bragg 103, 203.

Le principe d'une cellule de Bragg 103, 203 est d'agencer en différentes zones de la fibre optique 104, 204 des capteurs de déformations. La fibre optique 104,204 à cellules de Bragg 103, 203 est particulièrement adaptée aux matériaux composites puisqu'elle peut être incorporée avec les autres fibres.

L'interrogation de chaque cellule de Bragg 103, 203 se réalise notamment au moyen de signaux lumineux de longueurs d'ondes différentes. Chaque cellule de Bragg 103, 203 modifie la lumière qui lui correspond et restitue un signal lumineux modifié par la déformation imposée sur la fibre optique 104, 204. Le signal lumineux restitué est mesuré par un récepteur optique. En fonction de la technique de mesure et de démultiplexage employée, le nombre de capteurs par fibre optique 104,204 peut varier de 1 à 100 environ.

La cellule de Bragg 103, 203 provoque une perturbation périodique ou apériodique du coefficient effectif d'absorption ou de l'indice effectif de réfraction d'un guide optique. En d'autres termes, la cellule de Bragg 103, 203 réfléchit une bande d'ondes prédéterminée - large ou étroite - du faisceau lumineux tout en se laissant traverser par les autres bandes.

Pour photoimprimer une cellule de Bragg 103, 203 dans une fibre optique 104, 204, du verre photosensible est utilisé. La cellule de Bragg 103, 203 est photosensible. Sa photosensibilité résulte de l'exposition de la fibre optique 104, 204 aux rayonnements ultraviolets d'un laser. Cette exposition modifie l'indice de réfraction au coeur de la fibre optique 104, 204.

En irradiant la fibre optique 104, 204 de façon intensive, avec distribution périodique ou apériodique des rayonnements, on modifie de manière permanente l'indice de réfraction à l'intérieur de la fibre optique 104, 204. Ainsi, cette irradiation donne lieu à la photo impression d'une cellule de Bragg 103, 203 à un indice de réfraction prédéterminé, dans la fibre optique 104, 204 (voir figure 8) .

La cellule de Bragg 103, 203 devient donc un réflecteur spatial très sélectif. Comme on peut le voir sur la figure 8, toute modification de la période ou de l'indice de réfraction de la cellule de Bragg 103, 203 entraîne un décalage proportionnel du spectre réfléchi et transmis, ainsi qu'une modification de l'allure spectrale du signal lumineux. On peut donc soit mesurer l'amplitude du pic maximal soit la modification de l'allure spectrale en comparant l'allure de la cellule de Bragg soumise à l'effort à celle sans effort.

Les cellules de Bragg 103, 203 permettent la fabrication à faible coût d'instruments optiques ne fonctionnant que sur les longueurs d'ondes sélectionnées. Elles présentent néanmoins de grandes qualités de précision.

Sur la figure 1, est représenté schématiquement un ressort 100 de compression hélicoïdal, classiquement disposé entre une caisse 40 d'un véhicule et un support 50 d'une roue 60 d'un véhicule. Ce ressort 100 se comprime pour absorber les chocs dus aux irrégularités du sol sur lequel se déplace le véhicule.

Lorsque le ressort 100 subit une charge F1 pour le comprimer suivant une longueur L1, cette charge est calculée suivant l'équation suivante : $F1 = k (L0 - L1)$ où F1 est la charge sous longueur L1, L0 est la longueur libre à l'état non compressé du ressort et k est la raideur du ressort.

Le ressort 100 tel que représenté sur la figure 1 présente un ensemble de spires 105. Cet ensemble de spires 105 est préférentiellement réalisé à partir d'une tige ou d'un fil 106 en matériau composite de section transversale circulaire ou ovale.

La figure 2 montre que le ressort 100 comprend une structure composite comportant des fibres de renforcement 101 dans une matrice 102.

Le fil 106 à partir duquel est formé l'ensemble de spires 105 comprend des fibres de renfort 101 réalisé préférentiellement en verre ou en carbone, une matrice 102 de liaison réalisé préférentiellement en époxy ou en polyester, une fibre neutre 110 en l'endroit du centre de la spire 105, et une fibre optique 104 connectée à des cellules de Bragg 103. Etant au centre de la spire 105, la fibre neutre 110 doit en théorie ne voir aucune contrainte.

Sur la figure 1, le ressort 100 est hélicoïdal et comprend un fil 106 enroulé en hélice autour d'un premier axe (A). Le fil 106 présente une section sensiblement circulaire et s'étend le long d'un second axe (B) de la structure composite préférentiellement pleine. Le premier axe (A) définit l'axe usuel autour duquel le fil 106 définit une trajectoire hélicoïdal, et le second axe (B) définit l'axe s'étendant longitudinalement en le centre du fil 106.

En outre, comme figuré schématiquement sur la figure 1, le ressort 100 hélicoïdal présente une structure composite dans laquelle la fibre optique 104 est orientée suivant la direction définie par les fibres de renforcement 101.

Selon un mode particulier de réalisation, les fibres de renforcement 101 sont unidirectionnelles. Dans un autre mode de réalisation, les fibres de renforcement peuvent être croisées par couche, comme par exemple une première couche de fibre de renforcement orientées à +45° par rapport à un axe, et une seconde couche orientées à -45° par rapport à ce même axe.

Dans le cas d'un ressort 100 composite, les fibres 101 constituant le ressort 100 sont placées avec un angle d'environ 45° par rapport à l'axe (B) du fil de ressort 100. Les fibres 104 travaillent alors en traction-compression. De la même manière, la fibre optique 104 à cellules de Bragg 103 est placée avec un angle sensiblement égal à celui défini par les fibres de renfort 101 par rapport à l'axe (B) du ressort 100, afin qu'elle soit également soumise à une contrainte maximale en traction-compression.

Une analyse plus fine permet d'optimiser l'angle de tressage des fibres de renforcement et optique, et notamment d'optimiser la répartition des contraintes selon l'axe (B) du ressort. A titre d'exemple, pour des ressorts traditionnels de véhicules particuliers, l'angle optimal se situe autour de 44°.

Selon un mode particulier de réalisation, dans le ressort 100 hélicoïdal, les fibres de renforcement 101 sont inclinées d'un angle $\alpha$ par rapport au second axe, ledit angle $\alpha$ étant compris entre 30 et 50°, préférentiellement 44°.

L'intégration d'une fibre optique 104 dans le fil 106 d'un ressort 100 hélicoïdal présente une importance, et notamment par rapport à la sensibilité de la mesure.

Avantageusement, comme on peut le voir sur la figure 2, la fibre optique 104 est adjacente à un contour 111 extérieur du fil.

En effet, la proportion d'effort distinguée par la fibre optique 104 et donc la sensibilité de la mesure est proportionnelle à la distance radiale à la fibre neutre. En outre, comme figuré sur la figure 1, les contraintes maximales ont lieu au voisinage d'un côté intérieur 112 du ressort 100, c'est-à-dire la portion du contour 111 la plus proche de l'axe (A). Le ressort présente un côté extérieur 113, opposé au côté intérieur 112, et définissant la portion du contour 111 la plus lointaine de l'axe (A).

Selon un mode particulier de réalisation de la figure 1, dans le ressort 100 hélicoïdal, sont agencées au moins deux cellules de Bragg 103, une première cellule 103 et une seconde cellule 103 laquelle est agencée à une distance sensiblement équivalente à la distance parcourue par la fibre optique 104 lorsqu'elle opère une demi-révolution autour du second axe (B) du fil 106.

Préférentiellement, ces deux cellules de Bragg 103 à l'endroit où les efforts sont maximaux, sont à mi-distance entre le côté extérieur 113 et le côté intérieur 112 du ressort 100. La distance séparant les deux cellules de Bragg 103 doit être préférentiellement égale à : $D = \frac{df}{2} \times \sqrt{\pi^2 + 4.\tan(\beta)^2}$, avec $\beta$ l'angle d'enroulement de la fibre 104 par rapport au fil 106 de ressort 100 et df le diamètre d'implantation de la fibre optique 104. Le diamètre d'implantation de la fibre optique 104 est relatif au centre du fil 106 du ressort 100. Autrement dit, selon une coupe transversale du fil 106 comme montrée sur la figure 2, la distance séparant la fibre optique 104 du centre du fil 106 correspond à un rayon d'implantation de la fibre optique 104.

Sur la figure 3, est représenté un ressort 200 à lames. Le ressort 200 à lames présente un axe longitudinal (X) et comprend des lames 205 s'étendant sensiblement selon l'axe longitudinal (X) (voir figure 4 et 5). Au sein au moins de l'une d'elles (les lames 205) s'étend longitudinalement la fibre optique (204).

Dans un autre mode particulier de réalisation, la fibre optique s'étend dans toutes les lames (205).

Comme on peut le voir sur la figure 5, le ressort à lames 200 peut être assimilé à une poutre de longueur active L, d'épaisseur e et de largeur B, soumis à une charge P.

Lorsque le ressort 200 est soumis à une charge P, la lame 205 est soumise à un moment fléchissant Mfz. Classiquement, comme montré sur les figures 4 et 6, ce moment est maximum au centre de la lame 205. La contrainte en flexion est donc maximale au centre de la lame et est égale à Mfzmax = PL/4.

Dans le plan (XOY), les fibres 201 sont concentriques, le centre de flexion O étant situé vers le haut.

Il est connu que la contrainte normale à la section varie linéairement en fonction de y et est donc maximale en bordure de lame 205, en traction vers le bas, et en compression vers le haut.

$$\sigma_{xx} = \frac{M_{fz}}{I_z} \times y$$

où Iz est le moment quadratique selon l'axe Z calculé en fonction de la forme de la section droite.

Dans le cas d'une section de lame rectangulaire :

$$I_z = \frac{Be^3}{12}$$

La contrainte maximale en traction/compression dans la fibre 204 sera donc :

$$\sigma_{xx\max} = \frac{3PL}{2Be^2}$$

De façon à s'affranchir de la dispersion sur le positionnement relatif de la cellule de Bragg 203, il est proposé dans un mode de réalisation de l'invention d'agencer une première cellule (203) et une seconde cellule (203) disposées chacune respectivement de part et d'autre d'un point (M) de moment fléchissant maximum, les première et seconde cellule (203) définissant des distances avec le point (M) de moment fléchissant maximum sensiblement égales entre elles et définissant entre elles une distance maitrisée D. Typiquement, les première et seconde cellule sont disposées chacune respectivement de part et d'autre d'un point définissant le milieu de lame (205) suivant l'axe longitudinal (X).

La distance D doit être choisie assez grande pour garantir ce positionnement de part et d'autre du point de moment fléchissant maximum en fonction de la dispersion de D mais la plus petite possible pour être positionnée dans les zones de plus grandes contraintes et donc permettant au capteur d'être le plus précis possible.

La contrainte moyenne mesurée sera alors égale à :

$$\sigma_{xx_mesure_Bragg} = \frac{3P(L-D)}{2Be^2}$$

Les cellules de Bragg 203 doivent être placées de préférence sur les lames 205 qui mesurent les plus grandes déformations. Plus précisément, comme montré sur la figure 3, le ressort à lames présente une lame supérieure 210 et une lame inférieure 211 et des lames intermédiaires 212. Dans un mode préférentiel de réalisation, seules les lames supérieures 210 et inférieures 211 sont équipées de cellules de Bragg 203.

Préférentiellement, les cellules de Bragg 203 sont agencées dans le ressort 200 à lames de telle manière que les cellules de Bragg 203 s'étendent à l'endroit où les efforts sont maximaux. Ainsi, il est particulièrement avantageux que les cellules de Bragg 203 soient disposées dans le ressort 200, dans le plan (YZ) passant par le point O et intersectant la lame 205 transversalement en son milieu. En outre, elles peuvent être agencées au voisinage d'une face inférieure 221 ou d'une face supérieure 220 de la lame.

Selon un second objet de l'invention, est visé un dispositif 1 pour mesurer une charge d'au moins une roue (60) d'un véhicule, le dispositif comprenant :

a. Un ressort 100,200 tel que défini dans la présente description, monté sur ladite roue (60) ;

b. un module source 10 apte à émettre des signaux lumineux vers chaque cellule de Bragg 103,203 du ressort 100, 200 ;

c. un module récepteur 20 apte à recevoir des signaux transmis par les cellules de Bragg et à les convertir en données de sortie ;

d. un module de calcul 30 apte à traiter lesdites données de sortie et à calculer la charge de la roue (60) équipée du ressort 100,200.

Comme montré sur la figure 7, ce type de capteur présente l'avantage de pouvoir déporter les modules électroniques constitués par le module source 10, le module récepteur 20 et le module de calcul 30, loin des points de mesure.

Il est possible de faire la détection de deux manières : par réflexion au moyen d'un module source 10 formant également moyen récepteur 20, ou par réception au moyen d'un module source 10 et d'un module récepteur 20 distinct du module source 10.

Est considérée, sur les figures 9 à 11, les différentes manières d'agencer la fibre optique 104 connectée à des cellules de Bragg 103, dans un ressort 100 hélicoïdal.

A titre d'exemple, la fibre optique 104 peut être agencée de manière à ce qu'elle passe par la partie 120 inférieure du ressort 100.

La figure 10a montre que la fibre optique 104 présente une extrémité 121 de sortie, laquelle est positionnée de manière à se conformer à la forme d'une patte 122 d'indexage angulaire d'une coupelle 123 d'appui du ressort, et cela de manière à ce que l'extrémité 121 de sortie de la fibre 104 puisse s'étendre librement en dehors du fil 106 du ressort 100.

Il est également envisageable de modifier la forme de la patte 122 d'indexage de manière à ce que l'extrémité 121 de sortie de la fibre 104 puisse s'étendre librement en dehors du fil 106 du ressort 100.

En outre, la fibre optique 104 peut ensuite s'étendre sur la patte de fixation du capteur de vitesse de roue ou du flexible de frein.

Comme montré sur la figure 10b, une autre alternative peut consister en l'inversion du sens de pliage de la patte 122 d'indexage angulaire de sorte que la fibre optique 104 sortant prématurément du fil 106 puisse traverser un trou 124 d'empreinte de la patte 122 d'indexage.

Il est également envisageable de faire passer la fibre optique 104 par la partie supérieure (non représentée) du ressort 100. La fibre 104 s'étend alors sur l'extérieur de la coupelle d'appui afin de ne pas percer le bloc filtrant.

Une fois sortie du fil 106 du ressort 100, la fibre optique 104 est préférentiellement protégée au moyen d'une gaine 125 protectrice (voir figure 11). La gaine 125 protectrice peut être à l'endroit de l'extrémité 121 du ressort afin d'assurer une bonne tenue mécanique de l'ensemble défini par la fibre optique 104 accompagné de sa gaine 125 protectrice. Une portion de la fibre optique s'étendant vers l'extérieur du fil 106, du côté de l'extrémité 121 de sortie, est alors protégée intégralement.

Selon un troisième objet de l'invention, est visé un procédé pour mesurer une charge d'au moins une roue (60) d'un véhicule, le procédé comprenant les étapes suivantes:

a) au moins une fibre optique 104, 204 à cellules de Bragg 103, 203 formant capteur de mesure des déformations et comprenant des cellules de Bragg 103,203, est implantée dans un ressort 100, 200;
b) un module source 10 émet des signaux lumineux vers chaque cellule de Bragg 103,203;
c) chaque cellule de Bragg 103, 203 restitue un signal lumineux à un module récepteur 20;
d) le module récepteur 20 convertit les signaux lumineux en données de sortie et les transmet à un module de calcul 30;e) le module de calcul 30 traite les données de sortie et calcule la charge de la roue (60) équipée du ressort.

## Revendications

1. Ressort (100,200) d'un dispositif d'amortissement d'une roue (60) de véhicule comprenant une structure composite comportant des fibres de renforcement (101,201) dans une matrice (102,202), **caractérisé en ce que** la structure composite comprend au moins une cellule de Bragg (103,203) et au moins une fibre optique (104,204) connectée à la cellule de Bragg (103,203).

2. Ressort (100) selon la revendication 1, dans lequel le ressort (100) est hélicoïdal et comprend un fil (106) enroulé en hélice autour d'un premier axe (A), ledit fil (106) présentant une section sensiblement circulaire et s'étendant le long d'un second axe (B) de la structure composite dans laquelle la fibre optique (104) est orientée suivant la direction définie par les fibres de renforcement (101) .

3. Ressort (200) selon la revendication 1, dans lequel le ressort (200) présente un axe longitudinal (X) et comprend des lames (205) s'étendant sensiblement selon l'axe longitudinal (X) et au sein au moins de l'une d'elles s'étend longitudinalement la fibre optique (204).

4. Ressort (100) selon la revendication 2, dans lequel la fibre optique (104) est adjacente à un contour (111) extérieur du fil (106).

5. Ressort (100) selon l'une quelconque des revendications 2 ou 4, dans lequel sont agencées une première cellule (103) et une seconde cellule (103) de Bragg, la seconde cellule (103) étant agencée par rapport à la première cellules (103) à une distance sensiblement équivalente à la distance parcourue par la fibre optique (104) lorsqu'elle opère une demi-révolution autour du second axe (B) du fil.

6. Ressort (200) selon la revendication 3, dans lequel, longitudinalement, sont agencées une première cellule (203) et une seconde cellule (203) disposées chacune respectivement de part et d'autre d'un point (M) de moment fléchissant maximum, les première et seconde cellule (203) définissant des distances avec le point (M) de moment fléchissant maximum sensiblement égales entre elles et définissant entre elles une distance maitrisée D.

7. Ressort (200) selon la revendication 3, dans lequel, longitudinalement, sont agencées une première cellule (203) et une seconde cellule (203) disposées chacune respectivement de part et d'autre d'un point définissant le milieu de la lame (205) suivant l'axe longitudinal (X), les première et seconde cellule (203) définissant des distances avec le point définissant le milieu de la lame (205) sensiblement égales entre elles et définissant entre elles une distance maitrisée D.

8. Ressort (100) selon l'une quelconque des revendications 2, 4 ou 5, dans lequel les fibres de renforcement (101) sont inclinées d'un angle $\alpha$ par rapport au second axe (B), ledit angle $\alpha$ étant compris entre 30 et 50°.

9. Ressort (100) selon l'une quelconque des revendications 2, 4, 5 ou 8, dans lequel les fibres de renforcement (101) sont unidirectionnelles.

10. Dispositif (1) pour mesurer une charge d'au moins une roue (60) d'un véhicule, le dispositif (1) comprenant :

- un dispositif d'amortissement de la roue comprenant un ressort (100,200) selon l'une des revendications précédentes, adapté à être monté sur ladite roue (60) ;
- un module source (10) apte à émettre des signaux lumineux vers la cellule de Bragg (103,203) du ressort (100,200) ;
- un module récepteur (20) apte à recevoir des signaux transmis par la cellule de Bragg (103,203) et à les convertir en données de sortie ;
- un module de calcul (30) apte à traiter lesdites données de sortie et à calculer la charge de la roue (60) équipée du ressort (100,200).

11. Procédé pour mesurer une charge d'au moins une roue (60) d'un véhicule, le procédé comprenant les étapes suivantes:

a) au moins une fibre optique (104,204) à cellules de Bragg (103,203) formant capteur de mesure des déformations et comprenant des cellules de Bragg(103,203), est implantée dans un ressort (100,200) ;

b) un module source (10) émet des signaux lumineux vers chaque cellule de Bragg (103,203) ;

c) chaque cellule de Bragg (1033,203) restitue un signal lumineux à un module récepteur (20) ;

d) le module récepteur (20) convertit les signaux lumineux en données de sortie et les transmet à un module de calcul (30);

e) le module de calcul (30) traite les données de sortie et calcule la charge de la roue (60) équipée du ressort (100,200).

**12.** Véhicule pourvu pour son déplacement d'une roue (60), comprenant un ressort (100,200) selon l'une quelconque des revendications 1 à 9.

**Patentansprüche**

**1.** Feder (100, 200) einer Dämpfungsvorrichtung eines Fahrzeugrads (60), die eine Verbundstruktur enthält, welche Verstärkungsfasern (101, 201) in einer Matrix (102, 202) aufweist,
**dadurch gekennzeichnet, dass** die Verbundstruktur mindestens eine Bragg-Zelle (103, 203) und mindestens eine mit der Bragg-Zelle (103, 203) verbundene Lichtleitfaser (104, 204) enthält.

**2.** Feder (100) nach Anspruch 1, wobei die Feder (100) schraubenförmig ist und einen schraubenförmig um eine erste Achse (A) gewickelten Draht (106) enthält, wobei der Draht (106) einen im Wesentlichen kreisförmigen Querschnitt aufweist und sich entlang einer zweiten Achse (B) der Verbundstruktur erstreckt, in der die Lichtleitfaser (104) gemäß der durch die Verstärkungsfasern (101) definierten Richtung ausgerichtet ist.

**3.** Feder (200) nach Anspruch 1, wobei die Feder (200) eine Längsachse (X) aufweist und Federblätter (205) enthält, die sich im Wesentlichen gemäß der Längsachse (X) erstrecken und innerhalb mindestens eines von denen sich die Lichtleitfaser (204) in Längsrichtung erstreckt.

**4.** Feder (100) nach Anspruch 2, wobei die Lichtleitfaser (104) einem Außenumriss (111) des Drahts (106) benachbart ist.

**5.** Feder (100) nach einem der Ansprüche 2 oder 4, in der eine erste Zelle (103) und eine zweite Bragg-Zelle (103) angeordnet sind, wobei die zweite Zelle (103) bezüglich der ersten Zelle (103) in einem Abstand im Wesentlichen gleich der von der Lichtleitfaser (104) zurückgelegten Strecke angeordnet ist, wenn sie eine Halbdrehung um die zweite Achse (B) des Drahts ausführt.

**6.** Feder (200) nach Anspruch 3, wobei in Längsrichtung eine erste Zelle (203) und eine zweite Zelle (203) angeordnet sind, die je zu beiden Seiten eines Punkts (M) maximalen Biegemoments angeordnet sind, wobei die erste und die zweite Zelle (203) Abstände zum Punkt (M) maximalen Biegemoments definieren, die im Wesentlichen untereinander gleich sind und zwischen sich einen kontrollierten Abstand D definieren.

**7.** Feder (200) nach Anspruch 3, wobei in Längsrichtung eine erste Zelle (203) und eine zweite Zelle (203) angeordnet sind, die je zu beiden Seiten eines Punkts angeordnet sind, der die Mitte des Federblatts (205) gemäß der Längsachse (X) definiert, wobei die erste und die zweite Zelle (203) Abstände zu dem die Mitte des Federblatts (205) definierenden Punkt definieren, die untereinander im Wesentlichen gleich sind und zwischen sich einen kontrollierten Abstand D definieren.

**8.** Feder (100) nach einem der Ansprüche 2, 4 oder 5, wobei die Verstärkungsfasern (101) um einen Winkel $\alpha$ bezüglich der zweiten Achse (B) geneigt sind, wobei der Winkel $\alpha$ zwischen 30 und 50° liegt.

**9.** Feder (100) nach einem der Ansprüche 2, 4, 5 oder 8, wobei die Verstärkungsfasern (101) unidirektional sind.

**10.** Vorrichtung (1) zum Messen einer Last mindestens eines Rads (60) eines Fahrzeugs, wobei die Vorrichtung (1) enthält:

- eine Dämpfungsvorrichtung des Rads, die eine Feder (100, 200) nach einem der vorhergehenden Ansprüche enthält, die geeignet ist, auf das Rad (60) montiert zu werden;
- ein Quellenmodul (10), das Lichtsignale an die Bragg-Zelle (103, 203) der Feder (100, 200) senden kann;
- ein Empfangsmodul (20), das von der Bragg-Zelle (103, 203) übertragene Signale empfangen und sie in Ausgangsdaten umwandeln kann;
- ein Rechenmodul (30), das die Ausgangsdaten verarbeiten und die Last des mit der Feder (100, 200) ausgestatteten Rads (60) berechnen kann.

**11.** Verfahren zum Messen einer Last mindestens eines Rads (60) eines Fahrzeugs, wobei das Verfahren die folgenden Schritte enthält:

a) mindestens eine Lichtleitfaser (104, 204) mit Bragg-Zellen (103, 203), die einen Messfühler

der Verformungen bildet und Bragg-Zellen (103, 203) enthält, wird in eine Feder (100, 200) eingesetzt;
b) ein Quellenmodul (10) sendet Lichtsignale an jede Bragg-Zelle (103, 203);
c) jede Bragg-Zelle (1033, 203) gibt ein Lichtsignal an ein Empfangsmodul (20) ab;
d) das Empfangsmodul (20) wandelt die Lichtsignale in Ausgangsdaten um und überträgt sie an ein Rechenmodul (30);
e) das Rechenmodul (30) verarbeitet die Ausgangsdaten und berechnet die Last des mit der Feder (100, 200) ausgestatteten Rads (60).

**12.** Fahrzeug, das für seine Fortbewegung mit einem Rad (60) versehen ist, das eine Feder (100,200) nach einem der Ansprüche 1 bis 9 enthält.

## Claims

**1.** Spring (100,200) of a shock absorber device for a vehicle wheel (60), comprising a composite structure comprising reinforcement fibers (101,201) within a matrix (102,202),
**characterized in that** the composite structure comprises at least one Bragg cell (103,203) and at least one optical fiber (104,204) connected to the Bragg cell (103,203).

**2.** Spring (100) according to Claim 1, in which the spring (100) is helicoidal and comprises a wire (106) wound in a spiral around a first axis (A), said wire (106) having a substantially circular cross-section and extending along a second axis (B) of the composite structure in which the optical fiber (104) is oriented in the direction defined by the reinforcement fibers (101).

**3.** Spring (200) according to Claim 1, in which the spring (200) has a longitudinal axis (X) and comprises platelets (205) extending substantially along the longitudinal axis (X) and within at least one of them the optical fiber (204) runs longitudinally.

**4.** Spring (100) according to Claim 2, in which the optical fiber (104) is adjacent to an external contour (111) of the wire (106).

**5.** Spring (100) according to either one of Claims 2 and 4, in which a first Bragg cell (103) and a second Bragg cell (103) are arranged, the second cell (103) being arranged with respect to the first cell (103) at a distance substantially equivalent to the distance covered by the optical fiber (104) when it forms a half-revolution about the second axis (B) of the wire.

**6.** Spring (200) according to Claim 3, in which a first cell (203) and a second cell (203) are arranged longitudinally, each respectively disposed on either side of a point (M) of maximum bending moment, the first and second cell (203) defining distances with the point (M) of maximum bending moment substantially equal to one another and defining between them a controlled distance D.

**7.** Spring (200) according to Claim 3, in which a first cell (203) and a second cell (203) are arranged longitudinally, each respectively disposed on either side of a point defining the middle of the platelet (205) along the longitudinal axis (X), the first and second cell (203) defining distances with the point defining the middle of the platelet (205) substantially equal to one another and defining between them a controlled distance D.

**8.** Spring (100) according to any one of Claims 2, 4 and 5, in which the reinforcement fibers (101) are inclined at an angle $\alpha$ with respect to the second axis (B), said angle $\alpha$ being in the range between 30 and 50°.

**9.** Spring (100) according to any one of Claims 2, 4, 5 and 8, in which the reinforcement fibers (101) are unidirectional.

**10.** Device (1) for measuring a load on at least one wheel (60) of a vehicle, the device (1) comprising:

- a shock absorber device for the wheel comprising a spring (100,200) according to one of the preceding claims, designed to be mounted onto said wheel (60);
- a source module (10) designed to emit light signals toward the Bragg cell (103,203) of the spring (100,200);
- a receiver module (20) designed to receive signals transmitted by the Bragg cell (103,203) and to convert them into output data;
- a processor module (30) capable of processing said output data and of calculating the load on the wheel (60) equipped with the spring (100,200).

**11.** Method for measuring a load on at least one wheel (60) of a vehicle, the method comprising the following steps:

a) at least one optical fiber (104,204) with Bragg cells (103,203), forming a sensor for measuring the deformations and comprising Bragg cells (103,203), is installed in a spring (100,200);
b) a source module (10) emits light signals toward each Bragg cell (103,203);
c) each Bragg cell (103,203) returns a light signal to a receiver module (20);
d) the receiver module (20) converts the light

signals into output data and transmits it to a processor module (30);
e) the processor module (30) processes the output data and calculates the load on the wheel (60) equipped with the spring (100,200).

**12.** Vehicle equipped for its traction with a wheel (60), comprising a spring (100,200) according to any one of Claims 1 to 9.

FIGURE 1 (40)

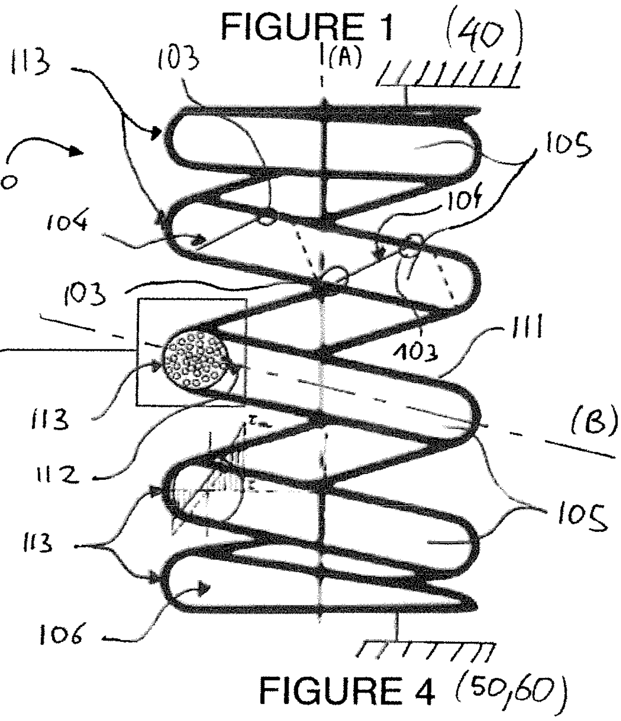


FIGURE 2

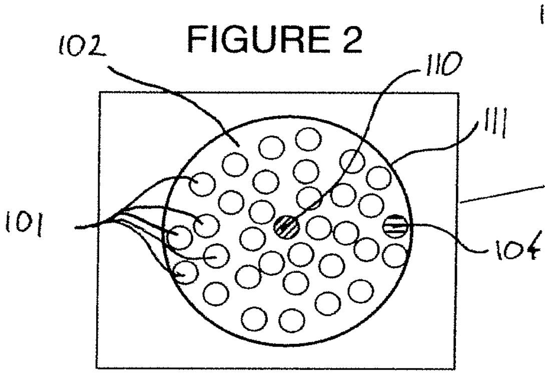


FIGURE 3

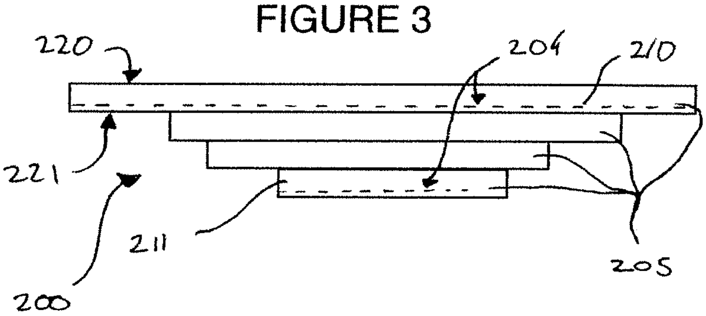


FIGURE 4 (50,60)

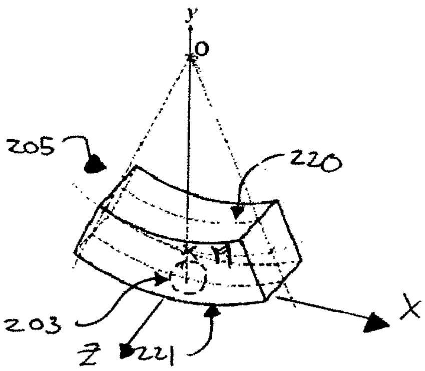


FIGURE 5

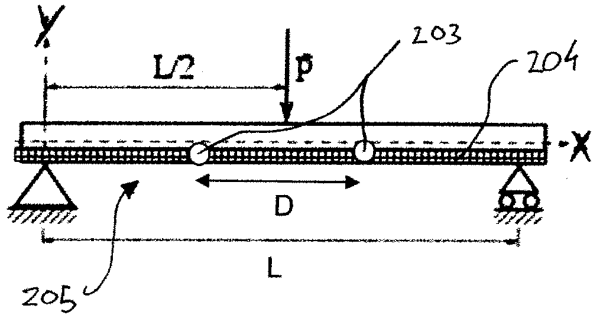


FIGURE 6

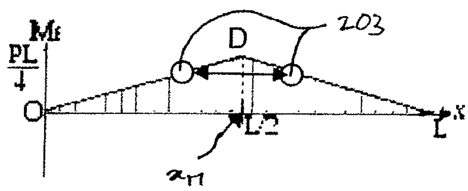

FIGURE 7

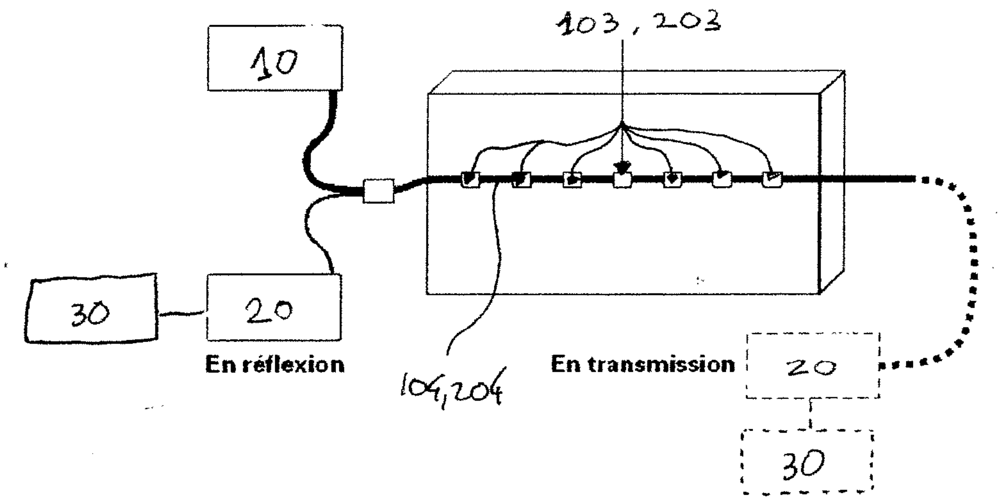


FIGURE 8

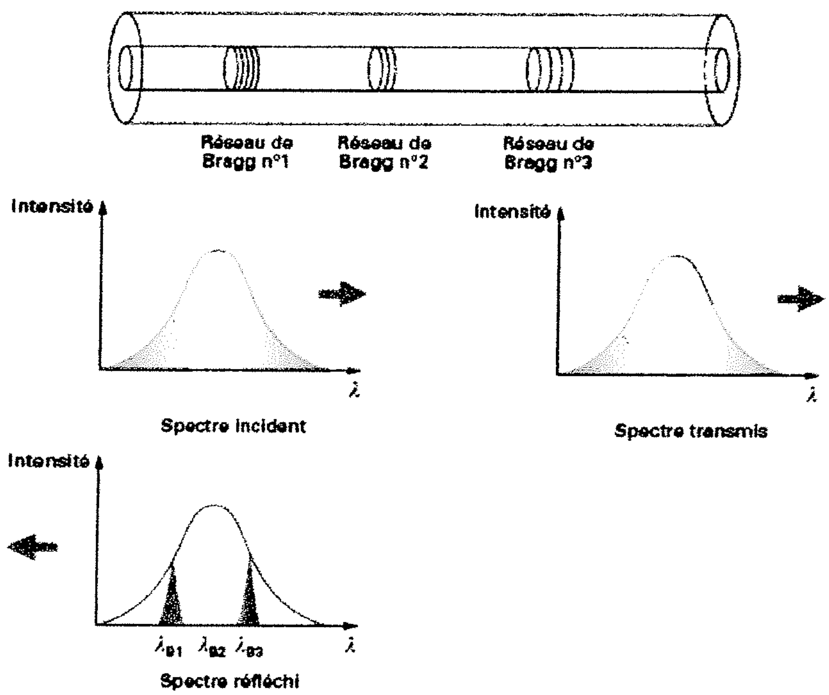

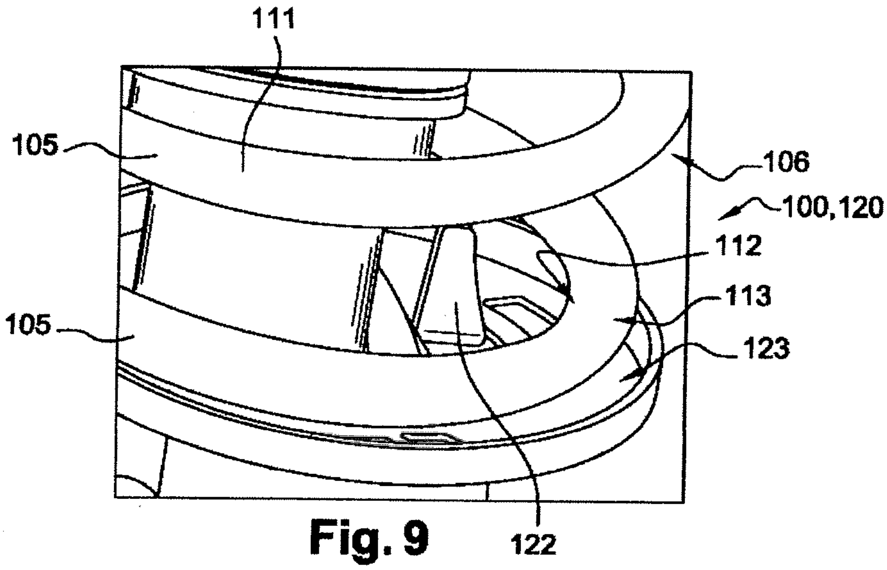


Fig. 9

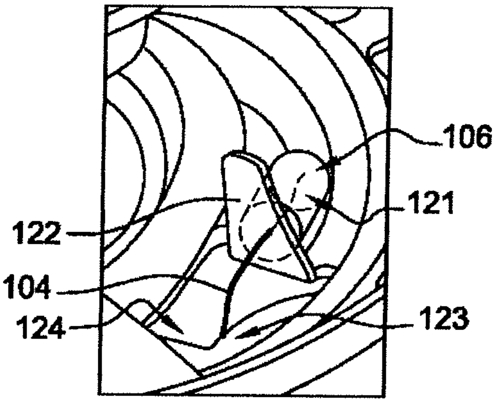


Fig. 10a

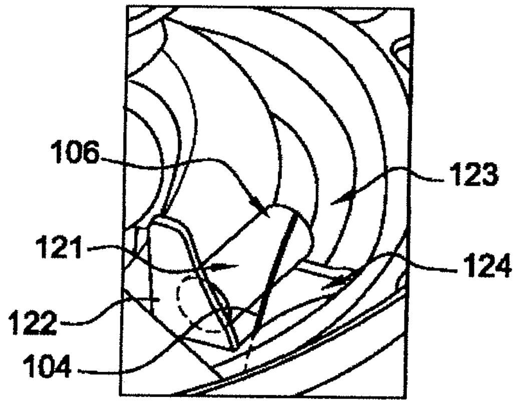


Fig. 10b

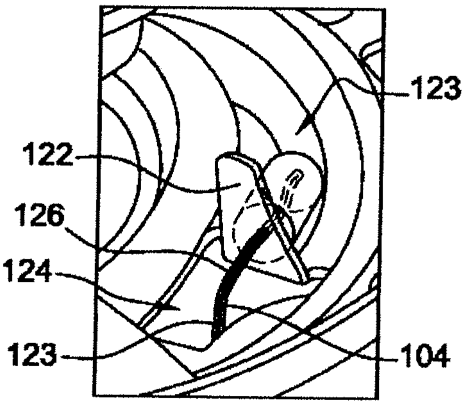


Fig. 11

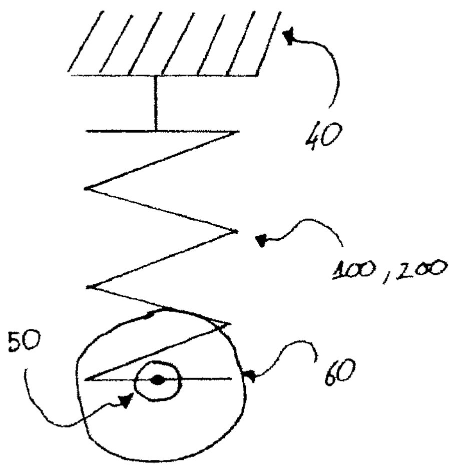


FIGURE 12

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description


- EP 0337488 A2
- US 4411159 A
- US 7083199 B2
- US 2004031911 A
- FR 2837250